# EUROPÄISCHE PATENTSCHRIFT

(11) **EP 1 002 395 B1**
(45) Veröffentlichungstag und Bekanntmachung des Hinweises auf die Patenterteilung: **12.11.2003**
(21) Anmeldenummer: 98943806.4
(22) Anmeldetag: 30.07.1998
(51) Int. Cl.: H04L 12/24

(54) **BEDIENEINRICHTUNG ZUR BEDIENUNG EINES NETZ-MANAGEMENT-SYSTEMS**
DEVICE FOR OPERATING A NETWORK MANAGEMENT SYSTEM
DISPOSITIF DE COMMANDE PERMETTANT DE COMMANDER UN SYSTEME DE GESTION RESEAU

(30) Priorität: 05.08.1997 EP 97113568
(43) Veröffentlichungstag der Anmeldung: 24.05.2000
(73) Patentinhaber: SIEMENS AKTIENGESELLSCHAFT, 80333 München (DE)
(72) Erfinder: BOGLER, Gerhard, D-82377 Penzberg (DE); SEVCIK, Maximilian, F-75015 Paris (FR)
(86) Internationale Anmeldenummer: EP9804777
(87) Internationale Veröffentlichungsnummer: WO99008420

(56) Entgegenhaltungen:
- OURI WOLFSON ET AL: "MANAGING COMMUNICATION NETWORKS BY MONITORING DATABASES" IEEE TRANSACTIONS ON SOFTWARE ENGINEERING, Bd. 17, Nr. 9, 1. September 1991, Seiten 944-953, XP000265866
- JANDER M: "WELCOME TO THE REVOLUTION" DATA COMMUNICATIONS, Bd. 25, Nr. 16, 21. November 1996, Seiten 39-42, 44, 46, 48, 50, 52/53, XP000633488
- LARSEN A K: "MAKING THE WEB WORK FOR MANAGEMENT" DATA COMMUNICATIONS, Bd. 25, Nr. 17, Dezember 1996, Seite 33/34 XP000637332
- "CMIP: COMMON MANAGEMENT INFORMATION PROTOCOL DER OSI" NTZ NACHRICHTENTECHNISCHE ZEITSCHRIFT, Bd. 48, Nr. 6, 1. Juni 1995, Seiten 16-19, XP000523111
- "SNMP: SIMPLE NETWORK MANAGEMENT PROTOCOL DES IAB" NTZ NACHRICHTENTECHNISCHE ZEITSCHRIFT, Bd. 48, Nr. 6, 1. Juni 1995, Seiten 20-22, XP000523112

## Beschreibung

Netz-Management-Systeme, insbesondere Telecommunications Management Networks (TMN), erlauben Betreibern privater oder öffentlicher Netze Operation&Maintenance (O&M) von Hardware, Software und Diensten in diesen Netzen.

In dem Dokument "Managing Communication Networks by Monitoring Databases" der Autoren Ouri Wolfson et al. in "IEEE Transactions on Software Engineering, Bd. 17, Nr. 9, September 1991, Seiten 944-953" wird ein Modell für ein Netz-Management offenbart. Nach diesem Modell kann Netz-Management als ein Monitoring und Controlling von Datenbasen aufgefaßt werden.

In dem Dokument XP000633488 der Autorin Mary Jander in "Data Communications, November 1996, Seiten 39-52" wird ein Netzwerk-Management-System auf Internet-Browser-Basis offenbart.

Im folgenden wird anhand einer weitgehend standardisierten TMN-Architektur (siehe z.B. ITU-T, Recommendation M.3010) die Problematik der Erfindung dargestellt.

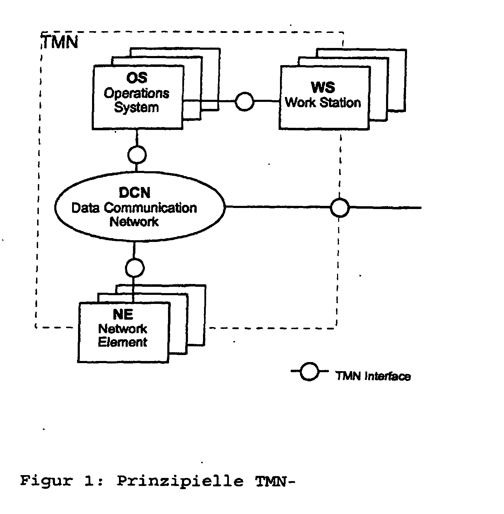

Figur 1 zeigt die TMN-Architektur im Überblick. Ein prinzipieller Bedien-Ablauf kann wie folgt beschrieben werden:
1.Eine Bedien-Person an einer Bedien-Station (WS = Work Station, z.B. PC) an einem TMN System startet eine Bedienaufgabe.
2.Die Bedien-Person autorisiert sich gegenüber einem OS (OS = Operations System) des TMN-Systems und gibt im Rahmen einer Operation & Maintenance (O&M) Aufgabe ein oder mehrere O&M Kommandos ein.
3.Diese O&M Kommandos werden vom OS interpretiert und an die betroffenen Einrichtungen im Netz (Netzelemente = NE) nach gegebenenfalls erforderlicher Formatumwandlung weitergeleitet.
4.Die NE führen die O&M-Kommandos aus, d.h. nehmen entsprechende Änderungen in ihrer Konfiguration vor oder stellen angeforderte Daten zur Verfügung. Die NE übermitteln die Resultate an das OS, das wiederum die Bedien-Person informiert.
Der erläuterte prinzipielle Ablauf ist in Standards und zahlreichen Veröffentlichungen wohldokumentiert.

Neben diesem Regelablauf kann es in einem Telekommunikationsnetz zu einer Reihe von besonderen **Ereignissen** kommen:
- Ausfälle von Telekommunikationseinrichtungen wie Vermittlungsstellen oder einzelner Komponenten, Leitungen, Signalisierungseinrichtungen etc. Diese Ausfälle sind von unterschiedlicher Auswirkung - vom Ausfall vitaler Netzfunktionen, die unmittelbar behoben werden müssen, bis zu geringen Beeinträchtigungen, deren Behebung nicht zeitkritisch ist.
- Eingriffe des Bedien-Personals vor Ort, z.B. die Ausserbetriebnahme von Einrichtungen im Netz zu Wartungszwecken.
- Automatische Sperrung/Abschaltung einzelner Einrichtungen im Netz, z.B. auf Grund von Überlastzuständen, die etwa eine Sperrung einzelner Verkehrsbeziehungen erfordern.
Dafür ausgerüstete Einrichtungen im Netz, z.B. Vermittlungsstellen, melden diese Ereignisse in Form sogenannter **Ereignis-Meldungen** an das zuständige OS, das seinerseits das Bedien-Personal des Betreibers informiert. Der prinzipielle Ablauf ist von den Standardisierungsgremien für TMN-konforme Systeme definiert.

Das TMN-Konzept der Standardisierungsgremien hat in der Praxis folgende Nachteile:
- TMN ist entkoppelt vom technischen Mainstream (offene, verteilte Systeme)
- TMN ist nur in der Theorie multi-vendor fähig, da die vollständige Standardisierung der TMN-Schnittstellen in der Praxis nicht möglich ist
- TMN ist schwer in eine bestehende Netz-Infrastruktur integrierbar
- TMN ist inflexibel und schwierig auf individuelle Betreiberbedürfnisse und O&M-Abläufe maßzuschneidern

**Internet-Technologie**, insbesondere World-Wide-Web-Technologie (WWW-Browser und -Server, WWW-Standards, insbesondere HTML und HTTP), wird als Mittel angesehen, diese Nachteile zu überwinden. Die Anwendung von Internet-Technologie für TMN ist noch in den Anfängen, findet jedoch zunehmende Beachtung. Gründe dafür sind:
- Internet-Technologie ist zukunftssicher. Sie stellt das Innovationsgebiet schlechthin in der Telekommunikation dar. Alle wesentlichen Organisationen und Firmen sind hier engagiert. Eine Vielzahl von Produkten existiert bzw. wird in kurzer Zeit verfügbar sein.
- Internet-Technologie ist am Markt erfolgreich. Sie ist auf unterschiedlichen Hardware- und Software-Plattformen verfügbar. Der Zugang zu Internet-Technologie ist für den Benutzer einfach sowohl hinsichtlich der Erlernbarkeit als auch hinsichtlich der Verfügbarkeit von Produkten und begleitenden Informationen. Internet-Technologie ist somit allgemein akzeptiert auf Grund der niedrigen Eingangsschwelle.
- Internet-Technologie erleichtert Interoperabilität zwischen Netzen verschiedener Technik und Organisation. Sie basiert auf pragmatischen, praxis-erprobten, allgemein verfügbaren Standards.

Der Einsatz von Internet-Technologie für den Regelbedienablauf in einem TMN , z.B. für die Eingabe von Bedien-Kommandos von einer WS über ein OS in ein NE (siehe Fig. 1), ist von einer Reihe von Organisationen (Beispiel: [Microsoft/Vertel, IBM]) untersucht und kann vom Prinzip als geklärt angesehen werden .

Der Einsatz von Internet-Technologie für die Behandlung von Ereignis-Meldungen ist demgegenüber weitgehend offen.

Der Erfindung liegt die Aufgabe zugrunde, eine Einrichtung und ein Verfahren zur Behandlung von Ereignis-Meldungen in einem Netz-Management-System anzugeben.

Im folgenden wird ein Ausführungsbeispiel der Erfindung (TMN-System) anhand der Zeichnung näher erläutert.

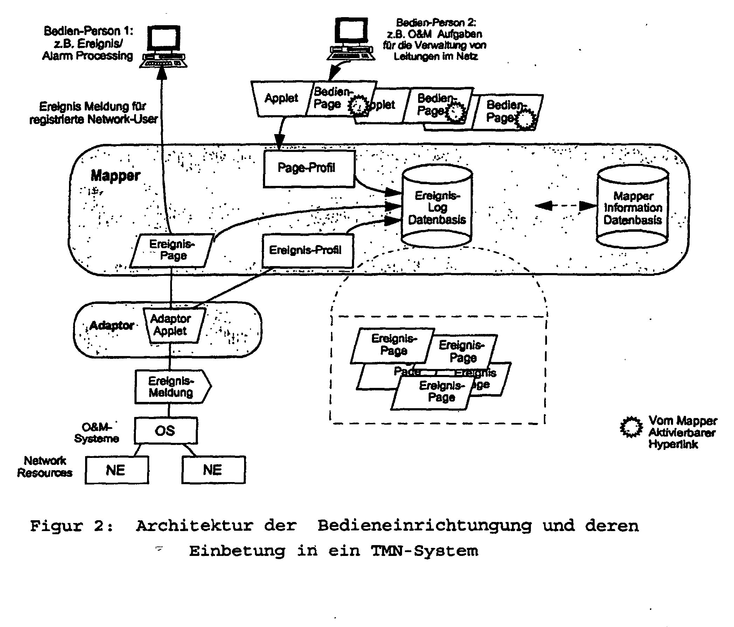

Figur 2 zeigt die Hauptkomponenten der erfindungsgemäßen Bedieneinrichtung (Mapper, Adaptor) sowie deren Einbettung innerhalb eines TMN-Systems. Der erfindungsgemäße Ablauf kann wie folgt beschrieben werden:
1. **Adaptor-Applets** empfangen **Ereignis-Meldungen** aus dem Netz bzw. von existierenden O&M Systemen. Ein Applet ist eine Software-Komponente, welche in einer beliebigen Umgebung ablauffähig ist. Die Technologie (z.B. Java) ist bekannt.
2. Jedes Applet extrahiert die in der Ereignis-Meldung enthaltene Information.
3. Die herkömmliche TMN-Architektur wird durch einen **Mapper** erweitert: Der Mapper erstellt aus der Ereignis-Information ein **Ereignis-Profil** zur Beschreibung der Auswirkungen des Ereignisses, das z.B. folgenden Inhalt haben kann:
   - Typ von Network Resources, die von dem Ereignis betroffen sind (z.B. Leitungen, Vermittlungseinrichtungen, Signalisierungspunkte)
   - Individuelle Network Resources, die von dem Ereignis betroffen sind, z.B. Leitung 513.
   - Registrierte Network User, die von dem Ereignis unverzüglich informiert werden müssen (z.B. Entstör-Personal des Operators: Bedien-Person 1 in Fig. 2)
   - O&M-Aufgaben, die von dem Ereignis betroffen sind. Darunter fallen Aufgaben, die auf Grund des Ereignisses nicht mehr oder nur mehr eingeschränkt durchführbar sind, Aufgaben, die auf Grund dieses Ereignisses nun wieder (nach einem längeren Ausfall) möglich sind und Aufgaben, die gerade wegen dieses Ereignisses relevant werden (z.B. Wartung) etc.
   - Andere Ereignisse, von denen das neu vorliegende Ereignis abhängt, bzw. mit denen ein Zusammenhang besteht.
Anmerkung: Die Ermittlung der betroffenen Ereignisse erfolgt mit Hilfe einer Korrelationsfunktion, von denen eine Vielzahl aus der Literatur bekannt sind.
1. Der Mapper unterhält zur Ermittlung des Ereignis-Profils eine **Mapper Information Datenbasis,** die die zu managenden Network-Resources und die Beziehungen zwischen diesen enthält.
2. Der Mapper generiert anhand der Ereignis-Information oder des Ereignis-Profils eine oder mehrere Ereignis-Pages gemäß den bekannten Internet HTML Prinzipien und speichert sie chronologisch in einer **Ereignis-Log Datenbasis**.
3. Die Bedienaufgaben (O&M Aufgaben) werden als durch Hyperlinks verbundene, in HTML formulierte **Bedien-Pages** dargestellt. Jede Bedien-Page entspricht einem Auswahl-Schritt und/oder mindestens einem Bedienschritt, z.B. Einrichten einer Leitung im Netz. Die Anwendung dieser Internet-Technik für einzelne O&M-Aufgaben ist bekannt.

Wenn die Bedien-Person (z.B. Bedien-Person 2 in Fig. 2) im Rahmen einer Bedienaufgabe eine HTML Bedien-Page aufruft, werden folgende Aktivitäten veranlaßt:
- Innerhalb einer Bedien-Page läuft ein Applet ab, das das zu dieser Page gehörende **Bedien-Profil** ermittelt: das Bedien-Profil enthält (ähnlich wie das Ereignis-Profil) Informationen, die dieser Page zugeordnet sind. Durch diese Informationen werden u.a. die durch die Page gegebenen Bedienmöglichkeiten beschrieben, d.h. z.B. die bedienbaren Network Resources und O&M-Aufgaben.
- Der Mapper vergleicht das ermittelte Bedien-Profil mit allen vorhandenen Ereignis-Profilen.
- Der Mapper ermittelt durch den genannnten Vergleich, ob eine in einem Ereignis-Profil enthaltene Information eine Ereignisauswirkung beschreibt, die die Durchführbarkeit der im Bedien-Profil beschriebenen Bedienmöglichkeiten (Network Resources, O&M-Aufgaben) beeinflußt. Ist das der Fall, macht der Mapper den Bediener auf diesen Umstand aufmerksam. Hierzu wird folgendes Verfahren eingesetzt:
   - Ein standardmäßig in allen HTML Bedien-Pages vorhandener Hyperlink "Ereignis liegt vor" wird aktiviert. Dies kann durch weitere, vom Bediener optional wählbare Methoden, verdeutlicht werden, etwa durch Blinken oder eine Laufschrift.
   - Der Hyperlink führt den Bediener nach Anklicken direkt zu der gespeicherten Ereignis-Page.
   - Mit einer HTML Bedien-Page können auf diese Weise mehrere relevante Ereignis-Pages verknüpft sein. Dies wird dem Bediener angezeigt bzw. ein "Nächstes Ereignis" Hyperlink wird aktiviert.
   - Der Bediener wird gewarnt, wenn er versucht, eine O&M Aufgabe durchzuführen, die auf Grund eines Ereignisses nicht mehr oder nur eingeschränkt möglich ist. Hyperlinks zu Bedien-Pages dieser O&M Aufgaben sind deaktiviert.

1. Wenn ein Ereignis erledigt ist (z.B. Ausfall behoben, Resource wieder funktionsfähig), meldet dies das Netzelement automatisch (oder die Wartungskraft manuell) durch eine "State Change" Ereignis-Meldung. Dadurch wird folgender Ablauf angestoßen:
   - Der Mapper verarbeitet diese Ereignis-Meldung, erzeugt wieder ein Ereignis-Profil, und entfernt das ursprüngliche, die gleichen Network-Resources betreffende, nun gegenstandslos gewordene Ereignis-Profil aus der Ereignis-Log Datenbasis.
   - Für gewöhnliche Bedien-Pages bewirkt das Löschen des ursprünglichen Ereignis-Profils in der Ereignis-Log Datenbasis, daß die "Ereignis liegt vor" Hyperlinks deaktiviert werden, und daß O&M Aufgaben, die auf Grund des Ereignisses gesperrt waren (Hyperlinks zu Bedien-Pages dieser O&M Aufgaben waren deaktiviert), nunmehr wieder freigegeben werden (Hyperlinks zu Bedien-Pages dieser O&M Aufgaben werden nunmehr wieder aktiviert).

Für registrierte User (z.B. Bedien-Person 1 in Fig. 2) wird an die Stelle des ursprünglichen Ereignisses ein "Ereignis erledigt" Ereignis generiert. Der Mapper sendet eine Mitteilung an den User, dass das ursprüngliche Ereignis nun gegenstandslos geworden ist.

Durch das genannte Verfahren werden folgende Vorteile erzielt:
- Erhöhung der Effizienz des Netzbetriebs: nur die Ereignisse/Alarme werden angezeigt, die für einen aktuellen Bedienablauf relevant sind. Die Behandlung von anderen Ereignissen/Alarmen kann zurückgestellt werden. Bedienabläufe, die von einem bestimmten Ereignis/Alarm nicht betroffen sind, können später erledigt werden. Dies spart Betriebskosten beim Netzbetreiber.
- Generische Lösung für alle TMN-Ereignis-Meldungen und Alarme, die eine Koordinierung der Bearbeitung von Ereignis-Meldungen mit den O&M-Aufgaben ermöglicht.
- Nutzung von zukunftssicherer Main-Stream-Technologie für Management in öffentlichen Netzen.
- Unabhängig von der Netz-Technologie (Telefon/ISDN, Breitband, Daten etc.). Dieses Verfahren kann nachträglich vorhandenen O&M-Systemen und Bedienaufgaben hinzugefügt werden.
- Konfigurierbare, an individuelle Kunden anpassbare Lösung (basierend auf Applets, Ereignis- und Bedien-Profilen, die mit bekannten Internet-Techniken/Tools hinzugefügt und entfernt werden können.

## Patentansprüche

1. Bedieneinrichtung zur Bedienung eines Netz-Management-Systems, die
a) eine Ereignis-Meldung von einem Netzelement (NE) des Netz-Management-Systems empfängt,
b) aus der empfangenen Ereignis-Meldung ein Ereignis-Profil zur Beschreibung der Ereignisauswirkungen erzeugt und in einer Datenbasis abspeichert,
c) bei Anforderung einer Bedien-Page das der angeforderten Bedien-Page zugeordnete Bedien-Profil mit den in der Datenbasis abgespeicherten Ereignis-Profilen vergleicht,
d) aus dem genannten Vergleich ermittelt, welche Ereignis-Profile Ereignisauswirkungen beschreiben, die für das Bedien-Profil relevant sind,
e) das Bedien-Profil in Abhängigkeit der durch den genannten Vergleich ermittelten relevanten Ereigisauswirkungen abändert,
f) schließlich anhand des abgeänderten Bedien-Profils die angeforderte Bedien-Page erzeugt.

2. Bedieneinrichtung nach Anspruch 1,
die erzeugte Bedien-Page mit den Ereignis-Pages der durch den genannten Vergleich ermittelten relevanten Ereignis-Profile verbunden ist , was in der Bedien-Page durch Aktivierung des Hyper-Links "Ereignis liegt vor" signalisiert wird.

3. Bedieneinrichtung nach einem der Ansprüche 1 oder 2,
die genannte Einrichtung auf der Internet-Technologie basiert.

4. Verfahren zur Behandlung von Ereignis-Meldungen in einem Netz-Management-System, demgemäß
a) in einer Bedieneinrichtung des Netz-Management-Systems eine Ereignis-Meldung von einem Netzelement empfangen wird,
b) aus der empfangenen Ereignis-Meldung ein Ereignis-Profil erzeugt und in einer Datenbasis abspeichert wird, wobei das Ereignis-Profil Auswirkungen des Ereignisses, insbesondere auf die Bedienbarkeit von Netzelementen, beschreibt,
c) bei Anforderung einer Bedien-Page das der angeforderten Bedien-Page zugeordnete Bedien-Profil mit den in der Datenbasis abgespeicherten Ereignis-Profilen verglichen wird,
d) aus dem genannten Vergleich ermittelt wird, welche Ereignis-Profile Ereignisauswirkungen beschreiben, die für das Bedien-Profil relevant sind,
e) das Bedien-Profil in Abhängigkeit der durch den genannten Vergleich ermittelten relevanten Ereigisauswirkungen abgeändert wird,
f) schließlich anhand des abgeänderten Bedien-Profils die angeforderte Bedien-Page erzeugt wird.

## Claims

1. User device for controlling a network management system, which user device
a) receives an event message from a network element (NE) in the network management system,
b) uses the received event message to produce an event profile to describe the event effects and stores said event profile in a database,
c) upon a request for a user page, compares the user profile associated with the requested user page with the event profiles stored in the database,
d) uses said comparison to ascertain which event profiles describe event effects which are relevant to the user profile,
e) modifies the user profile on the basis of the relevant event effects ascertained by said comparison,
f) finally takes the modified user profile as a basis for producing the requested user page.

2. User device according to Claim 1,
the user page produced is connected to the event pages for the relevant event profiles ascertained by said comparison, this being signalled in the user page by the activation of the hyperlink "event exists".

3. User device according to either of Claims 1 or 2,
said device is based on Internet technology.

4. Method for handling event messages in a network management system, according to which
a) a user device in the network management system receives an event message from a network element,
b) the received event message is used to produce an event profile and said event profile is stored in a database, the event profile describing effects of the event, particularly on the usability of network elements,
c) upon a request for a user page, the user profile associated with the requested user page is compared with the event profiles stored in the database,
d) said comparison is used to ascertain which event profiles describe event effects which are relevant to the user profile,
e) the user profile is modified on the basis of the relevant event effects ascertained by said comparison,
f) finally the modified user profile is taken as a basis for producing the requested user page.

## Revendications

1. Dispositif de commande permettant de commander un système de gestion réseau, lequel
a) reçoit un message d'événement d'un élément de réseau (NE) du système de gestion réseau;
b) génère, sur la base du message d'événement reçu, un profil d'événement pour décrire les conséquences de l'événement et l'enregistre dans une base de données;
c) compare, en cas de demande d'une page de commande, le profil de commande associé à la page de commande demandée avec les profils d'événement enregistrés dans la base de données;
d) établit, sur la base de la comparaison mentionnée, quels profils d'événement décrivent des conséquences d'événements pertinentes pour le profil de commande;
e) modifie le profil de commande en dépendance des conséquences d'événements pertinentes qui ont été établies par la comparaison mentionnée;
f) génère finalement la page de commande demandée sur la base du profil de commande modifié.

2. Dispositif de commande selon la revendication 1, dans lequel la page de commande générée est liée aux pages d'événement des profils d'événement pertinents déterminés par la comparaison mentionnée, ce qui est signalisé dans la page de commande par activation de l'hyperlien «présence d'un événement».

3. Dispositif de commande selon l'une des revendications 1 ou 2, dans lequel le dispositif mentionné se fonde sur la technologie Internet.

4. , Procédé permettant le traitement de messages d'événement dans un système de gestion réseau, selon lequel
a) un message d'événement d'un élément de réseau est reçu dans un dispositif de commande du système de gestion réseau;
b) un profil d'événement est généré sur la base du message d'événement reçu et est enregistré dans une base de données, le profil d'événement décrivant des conséquences de l'événement, en particulier sur l'aptitude d'éléments du réseau à être commandé ;
c) en cas de demande d'une page de commande, le profil de commande associé à la page de commande demandée est comparé avec les profils d'événement enregistrés dans la base de données;
d) il est établi, sur la base de la comparaison mentionnée, quels profils d'événement décrivent des conséquences d'événements pertinentes pour le profil de commande;
e) le profil de commande est modifié en dépendance des conséquences d'événements pertinentes qui ont été établies par la comparaison mentionnée;
f) la page de commande demandée est finalement générée sur la base du profil de commande modifié.
